**Europäisches Patentamt**

**European Patent Office**

**Office européen des brevets**

(19)

(11) Veröffentlichungsnummer : **0 371 917 B1**

(12)

# EUROPÄISCHE PATENTSCHRIFT

(45) Veröffentlichungstag der Patentschrift :
**16.12.92 Patentblatt 92/51**

(51) Int. Cl.$^5$ : **E01C 11/22, E03F 5/04**

(21) Anmeldenummer : **89810877.4**

(22) Anmeldetag : **17.11.89**

(54) **Aufsatzrahmen für eine Entwässerungsrinne.**

(30) Priorität : **30.11.88 CH 4446/88**

(43) Veröffentlichungstag der Anmeldung :
**06.06.90 Patentblatt 90/23**

(45) Bekanntmachung des Hinweises auf die
Patenterteilung :
**16.12.92 Patentblatt 92/51**

(84) Benannte Vertragsstaaten :
**CH DE FR GB LI**

(56) Entgegenhaltungen :
**EP-A- 0 151 684**
**EP-A- 0 206 996**
**AT-B- 380 282**
**DE-A- 2 844 748**

(73) Patentinhaber : **Poly-Bauelemente AG**
**Webereistrasse 47**
**CH-8134 Adliswil (CH)**

(72) Erfinder : **Thomann, Roland A.**
**Hehlstrasse 6**
**CH-8135 Langnau am Albis (CH)**

(74) Vertreter : **Schick, Carl et al**
**PATENTANWALTS-BUREAU ISLER AG**
**Postfach 6940**
**CH-8023 Zürich (CH)**

**EP 0 371 917 B1**

## Beschreibung

Die Erfindung betrifft einen Aufsatzrahmen mit Rinnenkörper für eine Entwässerungsrinne gemäss dem Oberbegriff des Patentanspruchs 1.

Aus der DE-OS 28 44 748 ist beispielsweise eine Entwässerungsrinne bekannt, die aus einem Rinnenkörper und einem auf diesem aufgesetzten Rahmen zur Aufnahme eines Rostes besteht, wobei der Rahmen an seinen Längsseiten zur Verankerung im Fundament dienende seitliche Ansätze aufweist.

Aus der EP-A1-0 151 684 ist ein Aufsatzrahmen bekannt geworden, der auf die Auflagefläche auf einem Rinnenkörper aufgesetzt werden kann und oben eine gleichartige Auflagefläche wie der Rinnenkörper aufweist. Dieser Aufsatzrahmen ist als vierseitig geschlossenes Gehäuse ausgebildet oder es kann zwei Seitenwände aufweisen, die durch Querrippen verbunden sind, wobei dieser Patentschrift nichts Näheres über die konkrete Ausgestaltung dieser Querrippen zu entnehmen ist, so dass nach dem Stand der Technik diese Querrippen so hoch wie die grossflächig ausgestalteten Seitenwände sein sollten.

Die Nachteile der hohen Querrippen werden gemäss der später bekannt gewordenen EP-A2-0 206 996 durch Verwendung von getrennten grossflächigen Einzelwänden vermieden, die jeweils durch Bolzen fixiert werden, wobei diese Bolzen nicht die zwei Einzelwände unter sich verbinden, sondern die Bolzen sind vorgesehen, um im Fundament verankert zu werden. Aus dieser Patentschrift ist nur ganz allgemein bekannt, dass solche Doppelwände gruppenweise auf Rinnenkörpern aufgesetzt werden können, um eine Entwässerungsrinne zu bilden.

Der Erfindung liegt daher die Aufage zugrunde, eine Entwässerungsrinne dieser oder ähnlicher Art derart zu verbessern, dass sie sich in ein weniger aufwendiges Rinnen-System integrieren kann.

Diese Aufgabe wird erfindungsgemäss durch die Verwendung eines Aufsatzrahmens mit einem Rinnenkörper mit den im kennzeichnenden Teil des Patentanspruchs 1 angegebenen Merkmalen gelöst.

Weitere vorteilhafte Ausführungen der Erfindung sind in den abhängigen Ansprüchen angegeben.

Im folgenden werden Ausführungsbeispiele der Erfindung anhand einer Zeichnung näher erläutert. Es zeigt:

Fig. 1 eine perspektivische Darstellung einer Entwässerungsrinne mit aufgesetztem Schwerlastrahmen und bei entferntem Rost;

Fig. 2 eine schematische Darstellung im Querschnitt einer Entwässerungsrinne mit einem erfindungsgemässen darauf montierten Aufsatzrahmen;

Fig. 3 eine schematische Darstellung im Schnitt nach der Linie I - I der Fig. 2;

Fig. 4 eine Draufsicht der Entwässerungsrinne, und

Fig. 5 eine schematische Darstellung von mehreren segmentartig auf je eine Entwässerungsrinne montierten Aufsatzrahmen.

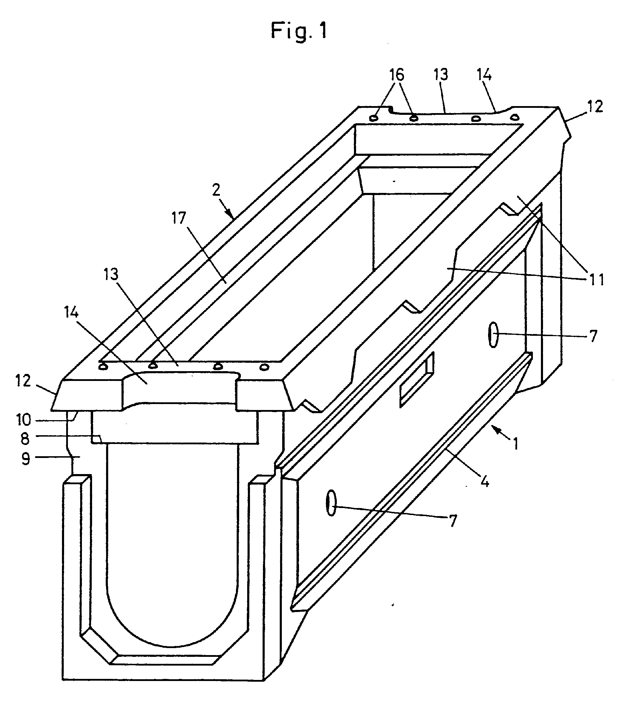

Die in Fig. 1 dargestellte Entwässerungsrinne besteht aus einem Rinnenkörper 1 und einem zur Aufnahme eines nicht dargestellten Gussrostes vorgesehenen Rahmen 2. Der Rinnenkörper 1 ist beispielsweise aus Polyesterbeton hergestellt und weist seitliche Vorsprünge 4 zur besseren Verankerung im Fundament auf. Eine zusätzliche Verankerung kann durch Verankerungsdübel erzielt werden, die vor der Verlegung in vorgeformte Ausnehmungen 7 des Rinnenkörpers 1 gesteckt werden. Die Oberkante des Rinnenkörpers 1 weist Auflageflächen 8 für den Rahmen 2 auf, und sie ist an den Längsseiten 9 des Rahmens mit parallelen Schienen versehen, die in entsprechende Längsnuten 10 des Rahmens 2 eingreifen. Die Aussenwände dieser Längsnuten 10 sind aussenseitig unterbrochen und bilden drei seitliche Lappen 11, die dem Rahmen 2 unmittelbar einen festen Halt geben. Der Rahmen 2 ist aussenseitig mit Schrägflächen 12 versehen, um ein senkrechtes Ausreissen aus dem anschliessenden Belagmaterial zu verhindern. Die beiden Längsseitenteile des Rahmens können an ihren Enden durch Querstege 13 miteinander verbunden sein. An dem Rahmen 2 sind im Bereich der Querstege 13 jeweils Aussparungen 14 angeordnet, welche beim Zusammenbau mehrerer Rahmen eine schlitzförmige Oeffnung in der Grösse etwa eines Rostschlitzes ergeben. Auf der Oberseite des Rahmens und des Rostes angeordnete Nocken 16 vermindern die Tendenz des zufliessenden Wassers, über den Rost hinauszuschiessen.

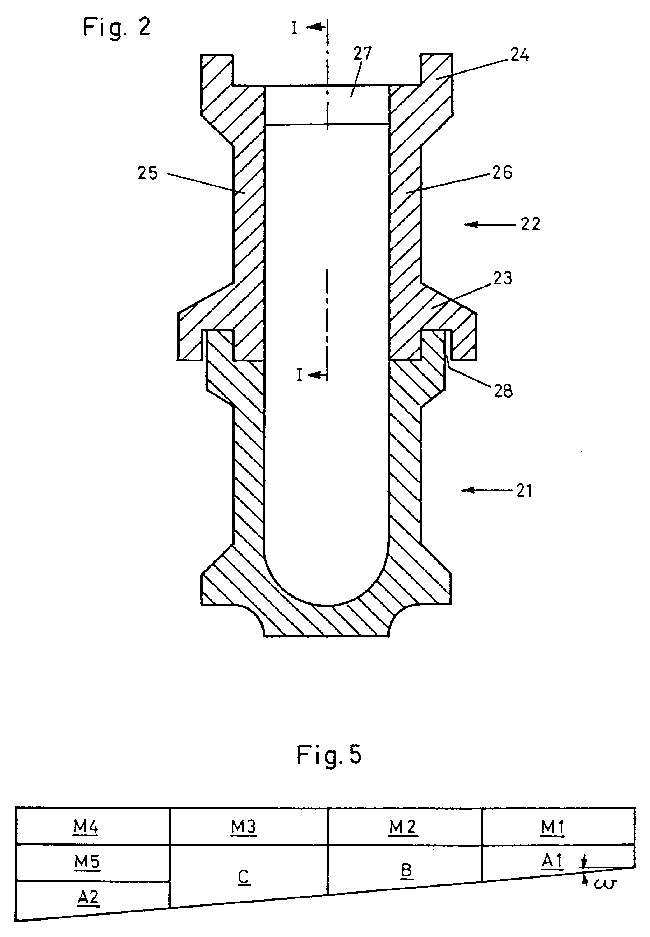

Der in Fig. 2 dargestellte Aufsatzrahmen 22 ist auf einen Rinnenkörper 21 ohne Rahmen 2 aufgesetzt. Der untere Teil 23 des Aufsatzrahmens 22 kann beispielsweise wie der untere Teil des Rahmens 2 nach Fig. 1 aufgebaut sein, jedoch vorzugsweise ohne die Querstege 13. Der obere Teil 24 des Aufsatzrahmens 22 ist beispielsweise in derselben Form aufgebaut wie der obere Teil des Rinnenkörpers 1 (Fig. 1) oder des Rinnenkörpers 21 (Fig. 2). Die Seitenwände 25 und 26 des Aufsatzrahmens 22 sind vorzugsweise nur durch zwei oder mehrere obere Querstege 27 miteinander verbunden.

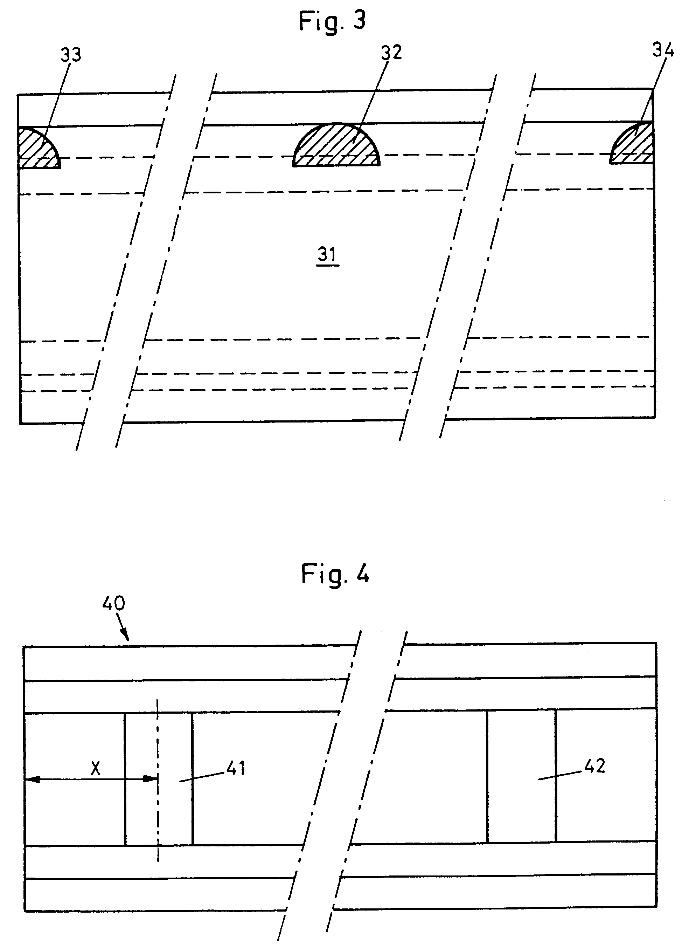

In Fig. 3 ist die Verbindung zwischen der inneren Seite einer Seitenwand 31 des Rinnenkörpers 22 (Fig. 2) und drei Stegen 32, 33, 34 im Schnitt dargestellt. Die Stege 33 und 34 befinden sich an den Enden des Rinnenkörpers, so dass ihr Querschnitt beispielsweise die Form eines Viertelkreises oder einer Viertelellipse hat. Der mittlere Steg 32 weist hingegen einen Querschnitt in Form eines Halbkreises oder einer Halbellipse auf. Die Rundung der Stege 32, 33, 34 ist nach oben gerichtet, um das Fliessen des Wassers zu erleichtern. Die Stege können auch spitzig, beispielsweise dreieckförmig ausgebildet sein.

Die in Fig. 4 dargestellte Variante eines Aufsatzrahmens 40 weist beispielsweise eine Anzahl n Stege in Abständen der Länge 2·x auf, wobei der erste und der letzte Steg sich jeweils in einem Abstand x vom entsprechenden Ende des Rinnenkörpers befindet, dessen Länge L = 2·x·n ist, wobei in diesem Fall alle Stege den gleichen Querschnitt aufweisen. Im Gegensatz dazu gilt für einen Rinnenkörper nach Fig. 3 die Formel L = 2·x·(n-1), wobei die Endstege Halbstege sind. In der Praxis können gute Resultate bereits mit zwei Stegen (Fig. 4) oder mit drei Stegen (Fig. 3) erzielt werden. Die Rinnenkörper 21 nach Fig. 2 können als Normelemente hergestellt und zu Rinnensträngen zusammengebaut werden. Die einzelnen Rinnenkörper können eine Nennweite von 10 cm und ein Gefälle, wie in Fig. 5 dargestellt, von tan w = k aufweisen. In Fig. 5 sind vier Rinnenkörper A1, B, C, A2 dargestellt, von denen nur die A1 und A2 gleich sind. Hingegen sind die darauf montierten Aufsatzrahmen M1, M2, M3, M4 und M5 alle gleich. Die zwei Aufsatzrahmen M4 und M5 sind übereinander auf dem Rinnenkörper A2 montiert. Wenn H die Höhe der Aufsatzrahmen und h die kleine Höhe des kleinsten Rinnenkörpers A1 ist, so gilt die Beziehung

$$n \cdot L \cdot \tan w + h = h + H$$

worin n die Anzahl Rinnenkörper einer Gruppe wie A1, B, C und L die Länge eines Rinnenkörpers ist. Daraus ergibt sich die Formel

$$H = n \cdot L \cdot \tan w = H_M - H_m$$

worin $H_M$ die grösste Höhe des Rinnenkörpers C und $H_m = h$ ist.

Der Vorteil des erfindungsgemässen Aufsatzrahmens besteht darin, dass die Breite b des Rostes relativ klein im Vergleich zu einem Rost für eine Entwässerungsrinne nach dem Stand der Technik ist: da das Volumen des Rostes für eine gegebene Durchbiegung und eine gegebene Last proportional zu $b^2$ ist, ergibt sich bei ähnlichen hydraulischen Eigenschaften eine grosse Ersparnis an Material bei der Herstellung des Rostes.

Bei der Herstellung eines erfindungsgemässen Aufsatzrahmens mit Nuten 28 stellt sich allerdings das Problem, dass die Nuten 28 nicht leicht in Formgiessverfahren realisierbar sind. Um diese Schwierigkeit zu überwinden, kann ein zweistufiges Verfahren verwendet werden, derart, dass in einem ersten Verfahrensschritt der Aufsatzrahmen 22 mit vollen Erweiterungen 23 in Formgiessverfahren geformt wird und unmittelbar danach in einem zweiten Verfahrensschritt die Nuten 28 in den Erweiterungen 23 ausgehöhlt werden.

Die Aufsatzrahmen können wie die Rinnen mit Vater- und Mutteranschlüssen versehen sein.

Der Aufsatzrahmen kann beispielsweise aus Kunststoffharzbeton (Duroplast) oder aus einem handelsüblichen Baumaterial wie Polyesterbeton, Zementbeton oder Kunststoffspritzguss bestehen oder nach einem Kunststoffpressverfahren hergestellt sein.

**Patentansprüche**

1. Aufsatzrahmen (22) mit Rinnenkörper (21; A1, B, C, A2) für eine Entwässerungsrinne, wobei der Aufsatzrahmen (22) durch zwei der Länge des Rinnenkörpers (21; A1, B, C, A2) entsprechende seitliche Wände (25, 26) gebildet ist, die durch Querrippen (27) parallel gehalten sind, dadurch gekennzeichnet, dass für die Höhe H des Aufsatzrahmens (22) die Formel

$$H = H_M - H_m$$

gilt, worin $H_M$ die maximale Höhe des grössten Rinnenkörpers (C) einer Gruppe aufeinanderfolgender Rinnenkörper (21; A1, B, C, A2) und $H_m$ die minimale Höhe des kleinsten Rinnenkörpers (A1, A2) ist.

2. Aufsatzrahmen (22) mit Rinnenkörper (21) nach Anspruch 1, dadurch gekennzeichnet, dass die Querripen als längliche schlanke Querstege (27) ausgebildet sind, die zusammen mit zwei Seitenwänden (25, 26) den Aufsatzrahmen als ein einheitliches einstückiges Gebilde bilden, dass die Querstege (27) im oberen Bereich der Seitanwände angeordnet sind, so dass ihre Höhe kleiner als die Höhe der Seitenwände ist, und dass die Höhe der Seitenwände mindestens 1,3-mal so gross wie der Abstand zwischen den Seitenwänden ist.

3. Aufsatzrahmen mit Rinnenkörper (21) nach Anspruch 2, dadurch gekennzeichnet, dass die Querstege (32, 33, 34) im Querschnitt nach oben abgerundet oder spitzig ausgebildet sind.

4. Aufsatzrahmen mit Rinnenkörper (21) nach Anspruch 2 oder 3, dadurch gekennzeichnet, dass der Aufsatzrahmen aus Kunstharzbeton oder einem anderen handelsüblichen Baumaterial besteht.

5. Aufsatzrahmen mit Rinnenkörper (21) nach einem der Ansprüche 2 bis 4, dadurch gekennzeichnet, dass der untere Teil (23) der Seitenwände (25, 26) derart ausgebildet ist, dass die Seitenwände (25, 26) auf einen handelsüblichen Rinnenkörper (21) aufsetzbar sind.

6. Aufsatzrahmen mit Rinnenkörper (21) nach einem der Ansprüche 2 bis 5, dadurch gekennzeichnet, dass der untere Teil (23) der Seitenwände (25, 26) in Form einer auf einen handelsüblichen Rinnenkörper (21) aufsetzbaren Erweiterung ausgebildet ist.

7. Aufsatzrahmen mit Rinnenkörper (21) nach einem der Ansprüche 2 bis 6, dadurch gekennzeichnet, dass in den Erweiterungen Längsnuten (28) vorhanden sind.

## Claims

1. Capping frame (22) with channel body (21; A1, B, C, A2) for a drainage channel, whereby the capping frame (22) is formed by two side walls (25, 26) which correspond to the length of the channel body (21; A1, B, C, A2) and are kept parallel by cross-ribs (27), characterized in that, for the height H of the capping frame (22) the formula
$$H = H_M - H_m$$
applies, where $H_M$ is the maximum height of the largest channel body (C) of a group of consecutive channel bodies (21; A1, B, C, A2) and $H_m$ is the minimum height of the smallest channel body (A1, A2).

2. Capping frame (22) with channel body (21) according to claim 1, characterized in that the cross-ribs are formed as longitudinally slim cross-webs (27), which together with the side walls (25, 26) form the capping frame as a uniform integrated structure, that the cross-webs (27) are arranged in the upper region of the side walls so that their height is less than the height of the side walls, and that the height of the side walls is at least 1.3 times the distance between the side walls.

3. Capping frame with channel body (21) according to claim 2, characterized in that, the cross-webs (32, 33, 34) are upwardly rounded or pointed in cross-section.

4. Capping frame with channel body (21) according to claim 2 or 3, characterized in that the capping frame is made of synthetic resin material or another standard commercial building material.

5. Capping frame with channel body (21) according to one of claims 2 to 4, characterized in that the lower part (23) of the side walls (25, 26) is formed in such a way that the side walls (25, 26) can be fitted on to a standard commercial channel body (21).

6. Capping frame with channel body (21) according to one of claims 2 to 5, characterized in that the lower part (23) of the side walls (25, 26) takes the form of an extension that can be mounted on standard commercial channel bodies (21).

7. Capping frame with channel body (21) according to one of claims 2 to 6, characterized in that longitudinal grooves (28) are present in the extensions.

## Revendications

1. Cadre supérieur (22) avec corps de rigole (21; A1, B, C, A2) pour une rigole de drainage, dont le cadre supérieur (22) est formé par deux parois latérales (25, 26) qui correspondent à la longueur du corps de rigole (21; A1, B, C, A2) et sont tenues en parallèle par des nervures transversales (27), **caractérisé par** l'application de la formule
$$H = H_M - H_m$$
pour la détermination de la hauteur H du cadre supérieur (22), $H_M$ étant la hauteur maximale du plus grand corps de rigole (C) d'un groupe de corps de rigole successifs (21; A1, B, C, A2) et $H_m$ étant la hauteur minimale du plus petit corps de rigole (A1, A2).

2. Cadre supérieur (22) avec corps de rigole (21) suivant la revendication 1, dans lequel les nervures transversales sont formées par des entretoises élancées de forme allongée (27) qui constituent avec deux parois latérales (25, 26) le cadre supérieur (22) en une structure uniforme et monopièce; dans lequel les entretoises (27) sont disposées dans la partie supérieure des parois latérales (25, 26), de sorte que leur hauteur soit plus petite que la hauteur des parois latérales (25, 26), et dans lequel la hauteur des parois latérales (25, 26) est au moins 1,3-fois si grande que l'écartement entre les parois latérales (25, 26).

3. Cadre supérieur (22) avec corps de rigole (21) suivant la revendication 2, dans lequel les entretoises (32, 33, 34) comportent vers le haut un profil arrondi ou pointu.

4. Cadre supérieur (22) avec corps de rigole (21) suivant la revendication 2 ou 3, dans lequel le cadre supérieur (22) se compose de béton de résine synthétique ou d'un autre matériau de construction d'usage.

5. Cadre supérieur (22) avec corps de rigole (21) suivant une des revendications 2 à 4, dans lequel la partie inférieure (23) des parois latérales (25, 26) est formée de sorte que les parois latérales (25, 26) puissent être posées sur un corps de rigole d'usage (21).

6. Cadre supérieur (22) avec corps de rigole (21) suivant une des revendications 2 à 5, dans lequel la partie inférieure (23) des parois latérales (25, 26) est construite en forme d'un élargissement qui peut être posé sur un corps de rigole d'usage (21).

7. Cadre supérieur (22) avec corps de rigole (21) suivant une des revendications 2 à 6, dans lequel les élargissements comportent des rainures longitudinales (28).

Fig. 1

Fig. 2

Fig. 5

| M4 | M3 | M2 | M1 |
|----|----|----|----|
| M5 | C | B | A1 |
| A2 | | | |

## Fig. 3

## Fig. 4